# EUROPEAN PATENT APPLICATION

(11) **EP 4 704 428 A1**
(43) Date of publication of application: **04.03.2026**
(21) Application number: 24795737.6
(22) Date of filing: 27.03.2024
(51) Int. Cl.: H04N 21/431, G06F 3/04845

(54) **SPECIAL-EFFECT GENERATION METHOD AND APPARATUS, AND COMPUTER DEVICE AND STORAGE MEDIUM**

(30) Priority: 28.04.2023 CN 202310484117
(71) Applicant: Beijing Zitiao Network Technology Co., Ltd., Beijing 100190 (CN)
(72) Inventor: SHANG, Fengyi, Beijing 100028 (CN); WANG, Ziyue, Beijing 100028 (CN); PAN, Jianxiong, Beijing 100028 (CN)
(74) Representative: Isarpatent
(86) International application number: PCT/CN2024/084017
(87) International publication number: WO 2024/222356

(57) **Abstract**

Provided in the present disclosure are a special-effect generation method and apparatus, and a computer device and a storage medium. The method comprises: in response to a selection operation of a user, acquiring a selected special-effect material; presenting, on a special-effect editing page, a special-effect preview effect which comprises a facial image and the special-effect material; in response to a selection operation for a target part, determining, from the facial image, a target part image corresponding to the target part, and updating the special-effect preview effect on the basis of the target part image; and in response to a determination operation for the updated special-effect preview effect, generating a target special effect on the basis of presentation information of the target part in the updated special-effect preview effect and the special-effect material. In this way, special-effect generation methods can be enriched, thereby improving the diversity and the special-effect quality of a generated special effect.

## Description

The application claims priority to the Chinese patent application No.202310484117.0, filed on April 28, 2023, the entire disclosure of which is incorporated herein by reference as part of the present application.

### TECHNICAL FIELD

The present disclosure relates to a method and apparatus of effect generating, a computer device and a storage medium.

### BACKGROUND

With the development of short video technology, more and more users are using short videos to acquire information and share lives. When shooting a short video, a user usually needs to beautify the video with the help of effects. In practical applications, different effects may have different display forms, and a playback effect of the video is largely due to selection of the effects. Therefore, this is a severe test for producing the effects.

### SUMMARY

Embodiments of the present disclosure at least provide a method and apparatus of effect generating, a computer device and a storage medium.

In a first aspect, an embodiment of the present disclosure provides a method of effect generating, including:
in response to a select operation of a user, acquiring a selected effect material;
displaying an effect preview effect including a face image and the effect material on an effect editing page;
in response to a select operation for a target part, determining a target part image corresponding to the target part from the face image, and updating the effect preview effect based on the target part image; and
in response to a determine operation for the effect preview effect that has been subjected to the updating, generating a target effect, based on display information of the target part in the effect preview effect that has been subjected to the updating and the effect material.

In a possible implementation, in a case where the selected effect material is a background image, the method further includes generating the effect preview effect according to a process including:
capturing, by a camera, a video;
recognizing contour information in a video frame of the video, separating a human body region image from the video frame based on the contour information, and overlaying the human body region image on the background image, to obtain the effect preview effect.

In a possible implementation, in a case where the selected effect material is a background image, the method further includes displaying the background image in the effect preview effect according to a process including:
determining display information of the background image, based on a target position of a target object in the background image and size information of the background image, in a case where it is detected that the background image includes the target object; and
displaying the background image according to the display information.

In a possible implementation, in a case where the effect material is a key point control material, the face image is a reference image and the effect preview effect is displayed in a first position;
the method further includes:
displaying a real-time effect preview effect including the effect material and the face image in a second position of the effect editing page; and
after responding to the select operation for the target part, the method further includes:
displaying the effect preview effect in the second position, and displaying the real-time effect preview effect in the first position, wherein a display area in the first position is larger than a display area in the second position.

In a possible implementation, the responding to the select operation for the target part, includes:
responding to the select operation for the target part executed on the face image in the effect preview effect; or,
responding to a trigger operation for a target button corresponding to the target part.

In a possible implementation, the display information of the target part includes a relative positional relationship between the target part image and the effect material;
the method further includes determining the relative positional relationship between the target part image and the effect material according to a process including:
determining first position information of the target part image set in the effect preview effect that has been subjected to the updating; and determining second position information of the effect material set in the effect preview effect that has been subjected to the updating; and
determining the relative positional relationship between the target part image and the effect material based on the first position information and the second position information.

In a possible implementation, after the updating the effect preview effect based on the target part image, the method further includes:
in response to an edit operation for the target part image, determining display information of the edited target part, and adjusting a display form of the target part according to the display information.

In a possible implementation, the obtaining the effect preview effect, includes:
rendering the background image, based on a background orthogonal camera processing module, to obtain a background texture;
inputting the background texture and the video into a main perspective camera processing module; and
replacing, by the main perspective camera processing module, other textures except a contour texture corresponding to the contour information based on the background texture, and rendering to obtain the effect preview effect.

In a possible implementation, the updating the effect preview effect based on the target part image, includes:
rendering the target part image based on a foreground orthogonal camera processing module, to obtain a target part texture; and
overlaying the target part texture on a screen texture of a currently displayed effect preview effect.

In a second aspect, an embodiment of the present disclosure further provides an apparatus of effect generating, including:
an acquiring module, configured to in response to a select operation of a user, acquire a selected effect material;
a first displaying module, configured to display an effect preview effect including a face image and the effect material on an effect editing page;
a generating module, configured to in response to a determine operation for the effect preview effect that has been subjected to the updating, generate a target effect based on display information of the target part in the effect preview effect that has been subjected to the updating and the effect material.

In a third aspect, an embodiment of the present disclosure further provides a computer device, including: a processor, a memory, and a bus. The memory stores machine-readable instructions being capable of being executed by the processor. When the computer device is running, the processor and the memory communicate through the bus. The machine-readable instructions, when executed by the processor, execute steps of the first aspect and any possible implementation of the first aspect.

In a fourth aspect, an embodiment of the present disclosure further provides a computer-readable storage medium, having a computer program stored thereon. The computer program, when run by a processor, executes the steps of the first aspect and any possible implementation of the first aspect.

In order to make the above purposes, features, and advantages of the present disclosure more obvious and understandable, the following description presents preferred embodiments and provides detailed explanations in conjunction with the accompanying drawings.

### BRIEF DESCRIPTION OF DRAWINGS

In order to provide a clearer explanation of the technical solution of the embodiments of the present disclosure, a brief introduction will be given to the accompanying drawings required for use in the embodiments. The accompanying drawings are incorporated into the specification and form a part of the specification. These drawings illustrate embodiments that comply with the present disclosure and are used together with the specification to explain the technical solution of the present disclosure. It should be understood that the following drawings only illustrate certain embodiments of the present disclosure and should not be considered as limiting the scope. For those skilled in the art, other relevant drawings can be obtained based on these drawings without creative efforts.
Fig. 1 shows a flow chart of a method of effect generating provided by an embodiment of the present disclosure;
Fig. 2a shows a schematic diagram of an effect type selection page in the method of effect generating provided by the embodiment of the present disclosure;
Fig. 2b shows a schematic diagram of an effect preview effect in the method of effect generating provided by the embodiment of the present disclosure;
Fig. 2c shows a schematic diagram of display of a target part image in the method of effect generating provided by the embodiment of the present disclosure;
Fig. 3 shows a flow chart of a method of determining a relative positional relationship between the target part image and an effect material provided by the embodiment of the present disclosure;
Fig. 4 shows a schematic diagram of architecture of an apparatus of effect generating provided by an embodiment of the present disclosure; and
Fig. 5 shows a structural schematic diagram of a computer device provided by an embodiment of the present disclosure.

### DETAILED DESCRIPTION

In order to clarify the purpose, technical solution, and advantages of the embodiments of the present disclosure embodiment, a clear and complete description of the technical solution of the embodiments of the present disclosure will be provided below in conjunction with the accompanying drawings. Obviously, the described embodiments are only a part of the embodiments of the present disclosure, not all of them. Generally, the components of the embodiments of the present disclosure described and illustrated in the accompanying drawings can be arranged and designed in various different configurations. Therefore, the detailed description of the embodiments provided in the accompanying drawings is not intended to limit the scope of the present disclosure to be protected, but only to represent selected embodiments of the present disclosure. Based on embodiments of the present disclosure, all other embodiments obtained by those skilled in the art without creative efforts are within the scope of protection of the present disclosure.

It should be noted that similar reference signs and letters indicate similar items in the drawings below; and therefore, once a certain item is defined in one drawing, it does not need to be further defined and explained in subsequent drawings.

The term "and/or" herein is used for describing an association relationship between objects, and indicates three possible relationships. For example, "A and/or B" may indicate a case that there is only A, a case that there are both A and B, and a case that there is only B. In addition, the term "at least one of" represents any one of a plurality of items or any combination of at least two of a plurality of items, for example, including at least one of A, B and C, may represent any one or more elements selected from a set composed of A, B and C.

It may be understood that before using the technical solutions disclosed in the respective embodiments of the present disclosure, a user should be informed of type, usage scope, usage scenarios, and the like of personal information involved in the present disclosure and authorization from the user should be acquired according to relevant laws and regulations in an appropriate manner.

For example, in response to receiving an active request of a user, a prompt message is sent to the user to clearly remind the user that the operation to be executed as requested by the user will require acquiring and using personal information of the user. Thus, according to the prompt information, the user may autonomously choose whether to provide personal information to software or hardware such as an electronic device, an application, a server, or a storage medium that executes the operation of the technical solution of the present disclosure.

As an optional but non-restrictive implementation, in response to receiving an active request of a user, a prompt message may be sent to the user through a pop-up window, where a prompt message may be presented in text. In addition, the pop-up window may also carry a selection control for the user to choose whether to "agree" or "disagree" to provide personal information to an electronic device.

It may be understood that the above-described processes of informing and acquiring user authorization are only illustrative and do not constitute a limitation on the implementation of the present disclosure; other modes that meet relevant laws and regulations may also be applied to the implementation of the present disclosure.

For the convenience of understanding this embodiment, firstly a method of effect generating disclosed in the embodiment of the present disclosure is introduced in detail; an executing body of the method of effect generating provided by the embodiment of the present disclosure is usually a computer device having certain computing power; the computer device, for example, includes: a terminal device, a server, or other processing device; the terminal device may be a user equipment (UE), a mobile device, a user terminal, a terminal, a cellular phone, a cordless phone, a personal digital assistant (PDA), a handheld device, a computing device, a vehicle-mounted device, a wearable device, etc. In some possible implementations, the method of effect generating may be implemented by a processor calling computer readable instructions stored in a memory.

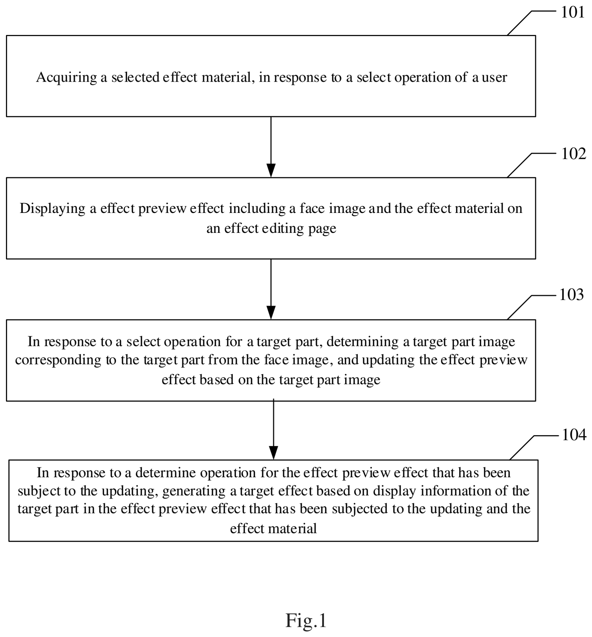

As shown in Fig. 1, it is a flow chart of the method of effect generating provided by the embodiment of the present disclosure; and the method includes step 101 to step 104:
Step 101: acquiring a selected effect material, in response to a select operation of a user.

Step 102: displaying an effect preview effect including a face image and the effect material on an effect editing page.

Step 103: in response to a select operation for a target part, determining a target part image corresponding to the target part from the face image, and updating the effect preview effect based on the target part image.

Step 104: in response to a determine operation for the effect preview effect that has been subjected to the updating, generating a target effect based on display information of the target part in the effect preview effect that has been subjected to the updating and the effect material.

Hereinafter, the above-described steps will be described in details.

For step 101, the effect material may be a component of the effect; and in one possible implementation, selectable effect materials corresponding to different types of effects may be different.

Here, the select operation of the user may include two: one is a select operation used for selecting an effect type, and the other is a select operation used for selecting a specific effect material.

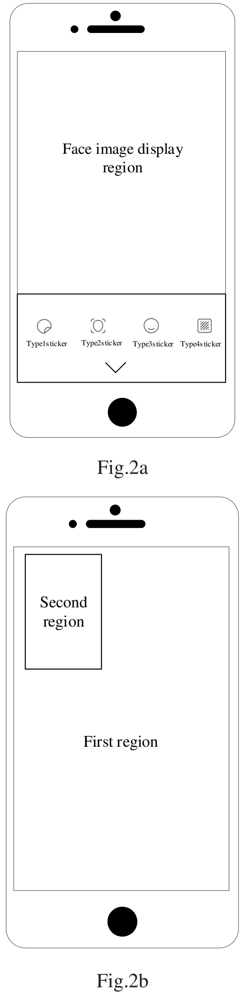

For example, a selection interface may be as shown in Fig. 2a. In Fig. 2a, a type 1 sticker, a type 2 sticker, a type 3 sticker, and a type 4 sticker, etc. may all refer to different effect types. After any effect type is triggered, the user may select to trigger the effect material again, to implement selection of the effect material.

Here, the effect material selected as triggered by the user may refer to any one of the effect materials provided by the system (i.e., an application), or any media content may be selected locally from a user end as the effect material, for example, any picture may be selected locally as the effect material.

It should be noted that the effect materials here may include but are not limited to static pictures, dynamic pictures, videos, animations, etc.

In one possible implementation, in a case where the effect material is a material locally uploaded, a size of the effect material (which here may refer to a size of memory occupied, and/or resolution, etc.) will affect the amount of memory occupied by a target effect finally generated. The generated target effect needs to be adapted to all devices, so with respect to some devices with poor performance, if the target effect occupies too much memory, normal use of the device may be affected.

Therefore, after responding to the select operation of the user, if the acquisition mode of the effect material is uploading locally, then the size of the media content selected by the user may be detected firstly; if the size does not exceed the preset size, then the locally uploaded effect material may be acquired; and/or, a resolution of the media content selected by the user may be detected firstly; and if the resolution does not exceed a preset resolution, the locally uploaded effect material may be acquired.

With respect to step 102, the face image may refer to a reference image, and/or, a physical face image, which may specifically be determined according to different effect types.

When displaying the effect preview effect on the effect editing page, effect preview effects generated based on the face image and the effect material are different under different effect types.

For example, when the effect material is a background image, the effect preview effect may be taking the background image as a background and overlaying the face image on the background image; in a case where the effect material is other material except the background image (e.g., a key point control material), the effect preview effect may refer to displaying the effect material directly in the preset position on the face image.

The key point control material may refer to a material which display position is related to a face key point. Specifically, when a position of the face key point changes, the display position corresponding thereto may also change accordingly, for example, it may be a face sticker, etc.

It should be noted that when the effect material is a key point control material, since the effect material is usually displayed on the face image, the face image is located in the bottom layer, and the effect material is located in a layer above the layer where the face image is located; and when the effect material is a background image, the background image is located in the bottom layer, and the layer where the face image is located is located above the layer where the background image is located.

In a case where the selected effect material is a background image, since the user has already set the background, the user may not want to display any content other than the face of the user. Therefore, a face contour of the user may be extracted separately and overlaid on the background image.

In one possible implementation, in a case where the selected effect material is a background image, when generating the effect preview effect, a reference image (the reference image may be a face image of a standard model) may be acquired firstly; then human body contour information in the reference image is recognized; based on the human body contour information, a human body region image is separated from the reference image; and then the human body region image is overlaid on the background image, to obtain the effect preview effect.

In another possible implementation, in order to improve a display effect of the face image, a video captured by a camera may also be directly adopted. Specifically, in the case where the selected effect material is a background image, when generating the effect preview effect, the video captured by the camera may be acquired/controlled firstly; then contour information in a video frame of the video is recognized; based on the contour information, a human body region image is separated from the video frame; and the human body region image is overlaid on the background image, to obtain the effect preview effect.

Or, in another possible implementation, the effect preview effect generated based on the above-described two implementations may be displayed simultaneously. For example, as shown in Fig. 2b, the effect preview effect generated based on the reference image may be displayed in a first position, and the effect preview effect generated based on the face video may be displayed in a second position. The user may switch between the display positions of the two types of effect preview effects by triggering the first position.

Here, the face video may be a beautified face video, for example, a face video having undergone makeup processing and/or deformation processing.

In practical applications, an unprocessed raw video captured by the camera may be directly acquired firstly; then the raw video may undergo different processing processes through different camera processing modules, to obtain the face video. For example, makeup processing may be performed through a makeup camera processing module, and face deformation (e.g., big eyes, thin face, etc.) processing may be performed through a face deformation camera processing module.

Optionally, when displaying the effect preview effect, different rendering processes may be executed respectively based on different camera processing modules.

For example, human body contour information in the video frame may be recognized through a main perspective camera processing module, a human body region image is separated from the video frame based on the human body contour information; and the background image is rendered onto a texture based on a background orthogonal camera processing module, to display the background image.

Optionally, when overlaying the face image on the background image, the background image may be rendered based on the background orthogonal camera processing module; after obtaining a background texture, the rendered background texture and the video are input into the main perspective camera processing module; then, the main perspective camera processing module may render the video to obtain a video texture, replace other textures in the video texture except a contour texture corresponding to the contour information based on the background texture, and render to obtain the effect preview effect, thereby overlaying the human body region image and the background image.

When the effect material is a key point control material, the effect preview effect may be overlaying the effect material on the face image.

Specifically, the effect material may be preset with a corresponding display position; and when the effect material is overlaid on the face image, it may be overlaid on the face image according to the corresponding display position. Preset display positions corresponding to different effect materials may be different or the same.

After displaying the effect preview effect on the effect editing page, the user may adjust the display information of the effect material by triggering the effect material.

The display information may include, for example, display position, display size, display direction, etc.

In the case where the effect material is a background image, the background image may include a portion of object. A purpose of taking the image including the object as the background is to synthesize a group photo with the object. Therefore, if the object is occluded during rendering of the background image, the purpose of generating a group photo may not be achieved.

Therefore, in one possible implementation, when displaying the background image in an effect preview background, the display information of the background image may be determined based on a target position of a target object in the background image and size information of the background image, and then the background image is displayed according to the display information, in a case where it is detected that the background image includes the target object.

Here, the object may be a physical object, for example, a building, a flower, etc., or may also be a virtual object, for example, a virtual character, a virtual building, etc. The display information may include, for example, a horizontal stretching ratio, a vertical stretching ratio, a cutting region range, etc.

The target position of the object in the background image may be represented by region coordinates, for example, which may be coordinates of vertices of the smallest rectangle that may frame the object. Optionally, when determining the background display information based on the target position of the object in the background image and the size information of the background image, a display ratio of a screen interface may be combined additionally.

With respect to step 103, the target part may be a physical part on the face that needs to be displayed separately, for example, which may be eyes, nose, mouth, etc.; or the target part may also be a combination of a plurality of physical parts, for example, five sense organs, etc.

The select operation for the target part may refer to a select operation for the target part executed on the face image in the effect preview effect; or, a trigger operation for a target button corresponding to the target part.

The select operation for the target part executed on the face image in the effect preview effect, for example, may refer to an operation of direct selection on the face image, for example, may refer to a smear select operation on the face image. In a case where the select operation is a direct select operation on the face image, firstly a part selection button needs to be triggered before executing the select operation, to enter a part selection mode.

Exemplarily, the effect editing page may display a "part selection" button; and after triggering the button, the user may directly make a smear selection on the face image, to implement free selection of the target part.

Or, in another possible implementation, a plurality of triggerable part buttons may be preset; after detecting that any part button is triggered, the part button may be taken as the target button, and a part corresponding to the part button may be taken as the target part.

In specific implementation, after any button is triggered, position information of the target part corresponding to the button in the face image may be detected; the target part image corresponding to the target part is extracted from the face image; and the effect preview effect is updated based on the target part image. However, if the face image does not include the target part, the effect preview effect cannot be updated. Therefore, before responding to the triggered target button, firstly it may be determined that the face image includes the target part.

For example, in a case where there are a plurality of part buttons, it may be predetermined whether the face image includes parts corresponding to the respective part buttons. If there is any part included, then the part button corresponding to the part may be set to a triggerable state. If there is no certain part included, the part button corresponding to the part may be set to a non-triggerable state.

Optionally, after responding to the select operation for the target part, key point detection may be performed on the target part in the face image, to determine position information of the target part in the face image; the target part image corresponding to the target part is segmented from the face image based on the position information; then the target part image is input into a foreground orthogonal camera; and the foreground orthogonal camera renders the target part image onto a texture, to display the target part image.

Here, when updating the effect preview effect based on the target part image, different updates may be made according to different occlusion situations of the target part, which may be specifically divided into:
Situation 1: the effect material is a background image.

When the effect material is a background image, since the face image is overlaid above the background image, the respective parts of the face image must not be occluded by the effect material.

In such situation, when updating the effect preview effect based on the target part image, for example, the target part image may be directly displayed in any other region except the initial display region of the target part on the face image. For example, if the initial display region of the target part on the face image is region A, then the target part image may be further directly overlaid within any region except region A, when updating the effect preview effect.

Or, the target part image may be displayed in a region position that satisfies a preset relative positional relationship with the initial display region. For example, if the initial display region of the target part on the face image is region A, then the target part image may be directly displayed in region B when updating the effect preview effect, and the preset relative positional relationship between region B and region A may be satisfied.

Here, when displaying the target part image in the above-described two modes, the face image may still display the target part, that is, the target part image is not an image separated from the face image, but a copied image of the region corresponding to the target part in the face image.

Or, in another possible implementation, when updating the effect preview effect based on the target part image, display of the face image may be directly canceled, and the target part image may be displayed.

Here, the canceling display of the face image and displaying the target part image, for example, may refer to adjusting transparency of the remaining region image of the face image except the target part image to 100%.

Optionally, in this implementation, rendering may also be performed through a plurality of camera processing modules. For example, the target part image may be rendered based on the foreground orthogonal camera processing module, to obtain a target part texture; and then the target part texture is overlaid on a screen texture of the currently displayed effect preview effect. Here, the screen texture may include a background texture rendered by the background orthogonal camera processing module, and the human body contour texture rendered based on the main perspective camera and overlaid on the background texture.

When the face image is a video frame in the captured face video, the display position of the target part image may be moved based on movement of the display position of the target part in the face video.

Situation 2: the effect material is a key point control material, and the target part is not occluded by the effect material.

In such situation, since a purpose of selecting the target part is to display the target part separately, if the target part is not occluded by the effect material, in one possible implementation, prompt information may be directly displayed, to prompt the user that the target part cannot be displayed separately. For example, the prompt information may be "Please occlude the xx part before cutout".

Therefore, in this implementation, before responding to the select operation for the target part, firstly it may be determined that the target part is occluded by the effect material.

In another possible implementation, in a case where the effect material is a key point control material and the target part is not occluded by the effect material, the relative positional relationship between the target part and the effect sticker may be preset. When updating the effect preview effect based on the target part image, the target part image may be displayed directly in the corresponding position according to the relative positional relationship.

Situation 3: the effect material is a key point control material, and the target part is occluded by the effect material.

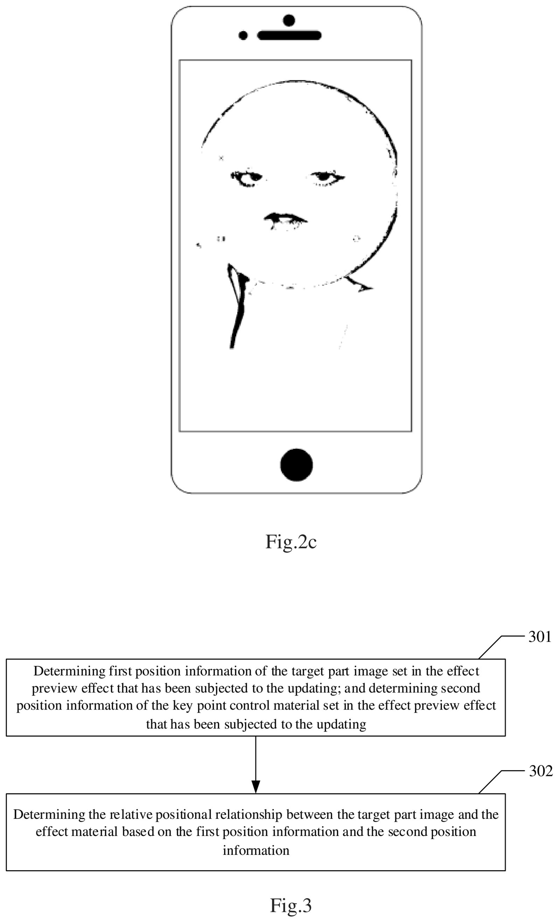

In such situation, since the target part is occluded by the effect material, the layer where the effect material is located is above the image where the face image is located. When updating the effect preview effect based on the target part image, a layer may be newly created and overlaid above the layer where the effect material is located, and the target part image is displayed on the newly created layer. An exemplary display effect may be as shown in Fig. 2c.

When the face image is a reference image, the reference image may dynamically display the display effect of the effect material, so the reference image and the physical face image may be combined simultaneously.

When displaying the effect preview effect, in a case where the effect material is a key point control material, the effect preview effect may be displayed in the first position of the effect editing page, and meanwhile the real-time effect preview effect including the effect material and the face image may be displayed in the second position of the effect editing page. A display area in the first position is larger than a display area in the second position.

After responding to the select operation for the target part, in order to display the target part image more clearly, the display positions of the effect preview effect and the real-time effect preview effect may be exchanged, that is, the effect preview effect is displayed in the second position, and the real-time effect preview effect is displayed in the first position.

Correspondingly, when updating the effect preview effect based on the target part image, the real-time effect preview effect may also be updated based on the target part image at the same time.

Since the face in the reference image is more standard, in a case where the effect material is a key point control material, the effect preview effect including the reference image may be displayed in the first position by default. This facilitates adjusting the display position of the key point control material, and accurately establishing a relative positional relationship between the key point control material and the reference image. The display area in the first position is larger, and the real-time effect preview effect may display the effect result more comprehensively and dynamically, so after selecting the target part, the real-time effect preview effect may be displayed in the first position to implement comprehensive display of the effect result.

When displaying the effect preview effect, in a case where the effect material is a background image, since the user may prefer to dynamically view the display effect of the background image during effect preview, the face image in the effect preview effect may be an image in the face video, that is, the effect preview effect per se is an effect preview effect generated based on the physical face.

In one possible implementation, after updating the effect preview effect based on the target part image, the user may further manually edit the target part image. For example, in response to an edit operation for the target part image, the display information of the edited target part may be determined, and a display form of the target part may be adjusted according to the display information.

Here, the display information may refer to a display position, a display size, a display trigger condition (e.g., blink trigger display, etc.), a display direction, etc.

It should be noted that information types included in the above-described plurality of pieces of display information may be the same or different, and may be specifically set according to actual situations.

In another possible implementation, after updating the effect preview effect based on the target part image, at least a portion of part image in the target part image may also be hidden in response to a trigger operation of the user.

Exemplarily, if the target part includes five sense organs, then the user may hide the nose and/or eyes, etc. by executing a trigger operation.

The trigger operation here may be, for example, a trigger operation for a hidden button for a partial part; and other triggering mode will not be limited in the present disclosure.

With respect to step 104
The determine operation for the effect preview effect that has been subjected to the updating, for example, may be a trigger operation for a completion button on the effect editing page. The effect preview effect that has been subjected to the updating is just the currently displayed effect preview effect.

In one possible implementation, in a case where the effect material is a key point control material, the display information may further include the relative positional relationship between the target part image and the effect material. The relative positional relationship between the target part image and the effect material may be determined according to the method shown in Fig. 3, which includes steps below:

Step 301: determining first position information of the target part image set in the effect preview effect that has been subjected to the updating; and determining second position information of the key point control material set in the effect preview effect that has been subjected to the updating.

Here, the second position information may be the position information of the key point control material associated with the target part image. In a case where there are a plurality of key point control materials added, the user may manually select the key point control material associated with the target part image. For example, association guide lines between the respective key point control materials and the target part image may be displayed; and the user may trigger selection of the association guide line, to establish association between the target part image and the key point control material. Key point control materials associated with different target part images may not be completely the same; and the same target part image may be associated with at least one key point control material.

Step 302: determining the relative positional relationship between the target part image and the effect material based on the first position information and the second position information.

In another possible implementation, the relative positional relationship between the target part image and the effect material may also be related to the type of the effect material.

For example, if the effect material is a foreground sticker, then the display position of the effect material on the screen interface is fixed, and the relative positional relationship between the target part image and the effect material is empty; and if the effect material is a face sticker, then the relative positional relationship is determined based on the method shown in Fig. 3.

After generating target effect based on the display information of the target part and the effect material, when the target effect is applied, the target part in the face video captured by the camera may be extracted, and displayed according to the display information of the target part; and the effect material is displayed.

In the method of effect generating provided by the embodiment of the present disclosure, the user may freely select the effect material and preview the effect by displaying the effect preview effect including the face image and the effect material on the effect editing page; further the user may freely select the target part in the displayed face image, to implement display of the target part only. Such mode may enrich generation modes of effects, which improves diversity and quality of the generated effects.

Those skilled in the art may understand that in the above-described method according to the specific implementations, a writing order of the respective steps does not imply a strict execution order or impose any limitations on the implementation process; and the specific execution order of the respective steps should be determined by a function and possible internal logic thereof.

Based on a same invention concept, an embodiment of the present disclosure further provides an apparatus of effect generating corresponding to the method of effect generating. Since the principle on which the apparatus solves the problem according to the embodiment of the present disclosure is similar to that of the above-described method of effect generating according to the embodiment of the present disclosure, the implementation of the method may be referred to for implementation of the apparatus, and no details will be repeated here.

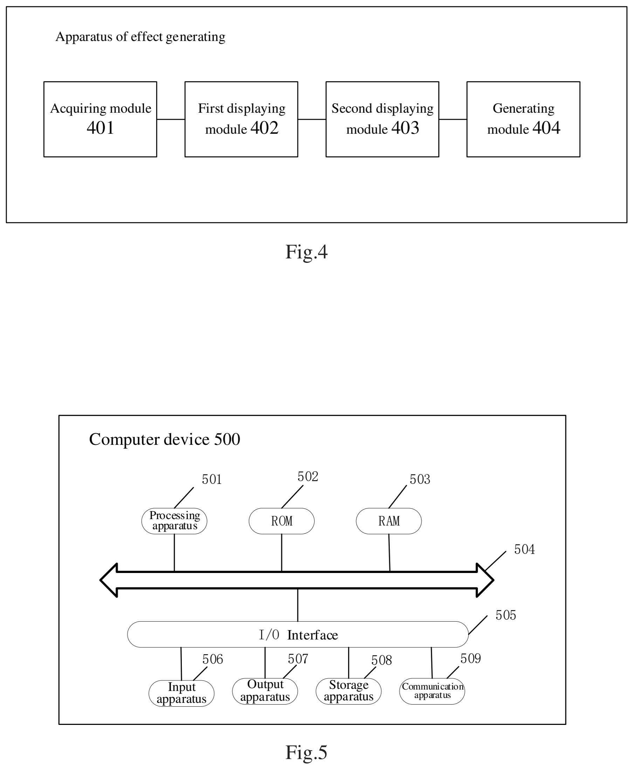

Referring to Fig. 4, it is a schematic diagram of architecture of the apparatus of effect generating provided by the embodiment of the present disclosure. The apparatus includes: an acquiring module 401, a first displaying module 402, a second displaying module 403, and a generating module 404; wherein
The acquiring module 401 is configured to in response to a select operation of a user, acquire a selected effect material;
The first displaying module 402 is configured to display an effect preview effect including a face image and the effect material on an effect editing page;
The second displaying module 403 is configured to in response to a select operation for a target part, determine a target part image corresponding to the target part from the face image, and updating the effect preview effect based on the target part image;
The generating module 404 is configured to in response to a determine operation for the effect preview effect that has been subjected to the updating, generate a target effect based on display information of the target part in the effect preview effect that has been subjected to the updating and the effect material.

In one possible implementation, in a case where the selected effect material is a background image, the first displaying module 402 is further configured to generate the effect preview effect according to a process including:
Capturing, by a camera, a video;
Recognizing contour information in a video frame of the video, separating a human body region image from the video frame based on the contour information, and overlaying the human body region image on the background image, to obtain the effect preview effect.

In one possible implementation, in a case where the selected effect material is a background image, the first displaying module 402 is further configured to display the background image in the effect preview effect according to a process including:
Determining display information of the background image, based on a target position of a target object in the background image and size information of the background image, in a case where it is detected that the background image includes the target object; and
Displaying the background image according to the display information.

In one possible implementation, in a case where the effect material is a key point control material, the face image is a reference image, and the effect preview effect is displayed in a first position;
The second displaying module 403 is further configured to:
Display a real-time effect preview effect including the effect material and the face image in a second position of the effect editing page;
After responding to the select operation for the target part, the second displaying module 403 is further configured to:
   Display the effect preview effect in the second position, and display the real-time effect preview effect in the first position, wherein a display area in the first position is larger than a display area in the second position.

In one possible implementation, the second displaying module 403, when responding to the select operation for the target part, is configured to:
Respond to the select operation of the target part executed on the face image in the effect preview effect; or,
Respond to a trigger operation for a target button corresponding to the target part.

In one possible implementation, the display information of the target part includes a relative positional relationship between the target part image and the effect material;
The generating module 404 is further configured to determine the relative positional relationship between the target part image and the effect material according to a process including:
Determining first position information of the target part image set in the effect preview effect that has been subjected to the updating; and determining second position information of the effect material set in the effect preview effect that has been subjected to the updating;
Determining the relative positional relationship between the target part image and the effect material based on the first position information and the second position information.

In one possible implementation, after updating the effect preview effect based on the target part image, the second displaying module is further configured to:
In response to an edit operation for the target part image, determine display information of the edited target part, and adjust a display form of the target part according to the display information.

In one possible implementation, the first displaying module 402 is configured to generate the effect preview effect according to a process including:
Rendering the background image, based on a background orthogonal camera processing module, to obtain a background texture; and
Inputting the background texture and the video into a main perspective camera processing module; and
Replacing, by the main perspective camera processing module, other textures except a contour texture corresponding to the contour information based on the background texture, and rendering to obtain the effect preview effect.

In one possible implementation, the second displaying module 403, when updating the effect preview effect based on the target part image, is configured to:
Render the target part image based on a foreground orthogonal camera processing module, to obtain a target part texture; and
Overlay the target part texture on a screen texture of the currently displayed effect preview effect.

The relevant illustration in the above-described method embodiment may be referred to for description of a processing flow of the respective modules and an interaction flow between the respective modules in the apparatus; and no details will be repeated here.

Based on a same technical concept, embodiments of the present disclosure further provide a computer device. Referring to Fig. 5, Fig. 5 is a structural schematic diagram of a computer device 500 provided by an embodiment of the present disclosure. The electronic devices in embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and fixed terminals such as a digital TV, a desktop computer, or the like, or various forms of servers, such as a standalone server or a server cluster. The electronic device illustrated in Fig. 5 is merely an example, and should not pose any limitation to the functions and the range of use of the embodiments of the present disclosure.

As illustrated in Fig. 5, the electronic device 500 may include a processing apparatus 501 (e.g., a central processing unit, a graphics processing unit, etc.), which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 5 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of some embodiments of the present disclosure are performed.

An embodiment of the present disclosure further provides a computer-readable storage medium. A computer program is stored on the computer-readable storage medium, and when executed by a processor, implements steps of the method of effect generating described in the above method embodiments. The storage medium can be a volatile or non-volatile computer-readable storage medium.

An embodiment of the present disclosure further provides a computer program product, which carries program code. The program code includes instructions that can be used to execute the steps of the method of effect generating described in the above method embodiment. For details, please refer to the above method embodiment, which will not be repeated here.

The above-mentioned computer program products can be specifically implemented through a hardware, a software, or a combination of the hardware and the software. In an optional embodiment, the computer program product is embodied as a computer storage medium, while in another optional embodiment, the computer program product is embodied as a software product, such as a Software Development Kit (SDK), etc.

Those skilled in the art can clearly understand that, for the sake of convenience and simplicity in description, the specific working process of the system and device described above can refer to the corresponding process in the aforementioned method embodiments, which will not be repeated here. In the several embodiments provided in the present disclosure, it should be understood that the disclosed systems, apparatuses, and methods can be implemented in other ways. The above-described embodiments of the apparatus are only illustrative. For example, the division of units is only a logical function division, and there may be other division methods in actual implementation. For example, multiple units or components can be combined or integrated into another system, or some features can be ignored or not executed. On the other hand, the mutual coupling or direct coupling or communication connection displayed or discussed can be indirect coupling or communication connection through some communication interfaces, apparatuses or units, which can be electrical, mechanical or other forms.

The units described as separate components may or may not be physically separated, and the components displayed as units may or may not be physical units, i.e. they can be located in one place or distributed across multiple network units. Some or all of the units can be selected according to actual needs to achieve the purpose of this embodiment.

In addition, the various functional units in the embodiments of the present disclosure can be integrated into one processing unit, physically exist separately, or integrate two or more units into one unit.

If the functions are implemented in the form of software functional units and sold or used as independent products, they can be stored in a processor executable non-volatile computer-readable storage medium. Based on this understanding, the technical solution of the present disclosure essentially or partially contributes to the prior art or can be embodied in the form of a software product, which is stored in a storage medium and includes several instructions to enable a computer device (which can be a personal computer, server, or network device, etc.) to perform all or part of the steps of the methods described in various embodiments of the present disclosure. The aforementioned storage medium includes: a USB flash drive, a portable hard drive, a Read Only Memory (ROM), Random Access Memory (RAM), a magnetic disk or an optical disk, and various other media that can store program code.

Finally, it should be noted that the above embodiments are only specific implementation methods of the present disclosure, used to illustrate the technical solution of the present disclosure, and not to limit it. The scope of protection of the present disclosure is not limited to this. Although the present disclosure has been described in detail with reference to the aforementioned embodiments, those skilled in the art should understand that any technical personnel familiar with this technical field can still modify or easily think of changes to the technical solution described in the aforementioned embodiments, or equivalently replace some of the technical features within the technical scope disclosed in the present disclosure; and these modifications, changes, or substitutions do not deviate the corresponding technical solutions from the essence and scope of the embodiments of the present disclosure, and should be covered within the scope of protection of the present disclosure. Therefore, the scope of protection of the present disclosure should be based on the scope of protection claimed in the claims.

## Claims

1. A method of effect generating, comprising:
in response to a select operation of a user, acquiring a selected effect material;
displaying an effect preview effect comprising a face image and the effect material on an effect editing page;
in response to a select operation for a target part, determining a target part image corresponding to the target part from the face image, and updating the effect preview effect based on the target part image; and
in response to a determine operation for the effect preview effect that has been subjected to the updating, generating a target effect, based on display information of the target part in the effect preview effect that has been subjected to the updating and the effect material.

2. The method according to claim 1, wherein in a case where the selected effect material is a background image, the method further comprises generating the effect preview effect according to a process comprising:
capturing, by a camera, a video;
recognizing contour information in a video frame of the video, separating a human body region image from the video frame based on the contour information, and overlaying the human body region image on the background image, to obtain the effect preview effect.

3. The method according to claim 1 or 2, wherein in a case where the selected effect material is a background image, the method further comprises displaying the background image in the effect preview effect according to a process comprising:
determining display information of the background image, based on a target position of a target object in the background image and size information of the background image, in a case where it is detected that the background image comprises the target object; and
displaying the background image according to the display information.

4. The method according to claim 1, wherein in a case where the effect material is a key point control material, the face image is a reference image and the effect preview effect is displayed in a first position;
the method further comprises:
displaying a real-time effect preview effect comprising the effect material and the face image in a second position of the effect editing page; and
after responding to the select operation for the target part, the method further comprises:
displaying the effect preview effect in the second position, and displaying the real-time effect preview effect in the first position, wherein a display area in the first position is larger than a display area in the second position.

5. The method according to claim 1, wherein the responding to the select operation for the target part, comprises:
responding to the select operation for the target part executed on the face image in the effect preview effect; or,
responding to a trigger operation for a target button corresponding to the target part.

6. The method according to claim 1, wherein the display information of the target part comprises a relative positional relationship between the target part image and the effect material;
the method further comprises determining the relative positional relationship between the target part image and the effect material according to a process comprising:
determining first position information of the target part image set in the effect preview effect that has been subjected to the updating; and determining second position information of the effect material set in the effect preview effect that has been subjected to the updating; and
determining the relative positional relationship between the target part image and the effect material based on the first position information and the second position information.

7. The method according to claim 1, wherein after the updating the effect preview effect based on the target part image, the method further comprises:
in response to an edit operation for the target part image, determining display information of the edited target part, and adjusting a display form of the target part according to the display information.

8. The method according to claim 2, wherein the obtaining the effect preview effect, comprises:
rendering the background image, based on a background orthogonal camera processing module, to obtain a background texture;
inputting the background texture and the video into a main perspective camera processing module; and
replacing, by the main perspective camera processing module, other textures except a contour texture corresponding to the contour information based on the background texture, and rendering to obtain the effect preview effect.

9. The method according to claim 1, wherein the updating the effect preview effect based on the target part image, comprises:
rendering the target part image based on a foreground orthogonal camera processing module, to obtain a target part texture; and
overlaying the target part texture on a screen texture of a currently displayed effect preview effect.

10. An apparatus of effect generating, comprising:
an acquiring module, configured to in response to a select operation of a user, acquire a selected effect material;
a first displaying module, configured to display an effect preview effect comprising a face image and the effect material on an effect editing page;
a second displaying module, configured to in response to a select operation for a target part, determine a target part image corresponding to the target part from the face image, and update the effect preview effect based on the target part image; and
a generating module, configured to in response to a determine operation for the effect preview effect that has been subjected to the updating, generate a target effect based on display information of the target part in the effect preview effect that has been subjected to the updating and the effect material.

11. A computer device, comprising: a processor, a memory, and a bus, wherein the memory stores machine-readable instructions being capable of being executed by the processor; when the computer device is running, the processor and the memory communicate through the bus; and the machine-readable instructions, when executed by the processor, execute steps of the method of effect generating according to any one of claims 1 to 9.

12. A computer-readable storage medium, having a computer program stored thereon, wherein the computer program, when run by a processor, executes steps of the method of effect generating according to any one of claims 1 to 9.
